# EUROPÄISCHE PATENTSCHRIFT

(11) **EP 0 644 081 B1**
(45) Veröffentlichungstag und Bekanntmachung des Hinweises auf die Patenterteilung: **11.12.1996**
(21) Anmeldenummer: 94114589.8
(22) Anmeldetag: 16.09.1994
(51) Int. Cl.: B60N 2/24, B60N 2/44

(54) **Fahrgastsitz**
Passenger seat
Siège pour passager

(30) Priorität: 21.09.1993 DE 9314208 U
(43) Veröffentlichungstag der Anmeldung: 22.03.1995
(73) Patentinhaber: Ignaz Vogel GmbH & Co KG, Fahrzeugsitze, D-76228 Karlsruhe (DE)
(72) Erfinder: Vogel, Ignaz, D 76228 Karlsruhe (DE)
(74) Vertreter: Trappenberg, Hans

(56) Entgegenhaltungen:
- EP-A- 0 283 571
- DE-A- 3 147 045
- DE-U- 9 314 208
- US-A- 4 057 214

## Beschreibung

Die Erfindung betrifft einen Fahrgastsitz, vorzugsweise zum Einbau in Land-, Wasser- und Luftfahrzeuge, mit einem Sitzuntergestell, welches Stützfüße aufweist, auf denen mindestens ein als Kastenholm ausgebildeter Querbügel befestigbar ist, welcher einstückig mit ihm verbundene Befestigungsstege hat, wobei wenigstens zwei Kästen vorhanden sind und mindestens ein Kasten des Kastenholms durch mindestens einen Steg unterteilt ist, der sich von einer im eingebauten Zustand sich waagrecht erstreckenden Wand des Kastens zu einer ihr gegenüberliegenden Wand des Kastens erstreckt.

Aus der EP-OS 0 283 571 ist ein Fahrgastsitz bekannt, welcher einen derartigen Kastenholm aufweist. Durch einen solcherart ausgebildeten Kastenholm wird ein Sitz mit guter Festigkeit und leichtem Aufbau erreicht. Wenn durch solche Kastenholme die Anforderungen an die Festigkeit der Sitze auch gut erfüllt werden, so besteht doch das Bedürfnis, die Stabilität der Sitze insbesondere im Hinblick auf Durchbiegung und Torsion zu verbessern, ohne daß dabei zu große Nachteile im Hinblick auf das Gewicht in Kauf genommen werden müssen.

Es ist Aufgabe der Erfindung, einen eingangs genannten Sitz derart auszubilden, daß er noch größere Gewichtskräfte und Torsionskräfte aufnehmen kann, ohne daß dabei das Gewicht des Holms stark zunimmt.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Erfindungsgemäß wird vorgeschlagen, daß mindestens ein Kasten des Kastenholms durch einen Steg unterteilt ist, der sich von einer im eingebauten Zustand waagrecht erstreckenden Wand des Kastens zur ihr gegenüberliegenden Wand des Kastens senkrecht erstreckt, und mindestens eine der durch den Steg verbundenen Wände sich zum Steg hin verdickt. Dadurch wird der Kasten unterteilt, das heißt es ist ein weiterer Kasten vorhanden. Durch den Steg erhält der Holm eine höhere Stabilität und weist wesentlich verbesserte Eigenschaften hinsichtlich eines Flatterns auf, welches bei bestimmten Motordrehzahlen beziehungsweise Geschwindigkeiten des Fahrzeugs auftreten kann.

Es hat sich gezeigt, daß durch die Verdickung der Wand in etwa zur Mitte hin und durch einen von der dicksten Stelle ausgehenden Steg, welcher zwei gegenüberliegende Wände des Kastens verbindet, die Stabilität eines Kastenholms wesentlich erhöht wird. Durch die Verdickung der Wand symmetrisch zu dem sich von ihr erstreckenden Steg wird erreicht, daß die Stabilität des Kastenholms nahezu richtungsunabhängig ist.

Zwar wird durch die Verdickung der Wände des Kastenholms das Gewicht des Kastenholms erhöht, jedoch nur in geringem Umfang. Die inneren Flächen der die Verdickung aufweisenden Wand des Kastenholms bilden beidseitig des Stegs jeweils mit der äußeren Fläche der Wand des Kastenholms einen Winkel von etwa 10°. Dadurch werden die von dem Steg in die Wand eingeleiteten Kräfte optimal von dieser Wand aufgenommen sowie ein sehr gutes Verhältnis von Gewicht zu Festigkeit erreicht. Dadurch, daß sich die Verdickung in den Kasten hinein erstreckt, behält der Kastenholm nach außen seine ebene Oberfläche und kann dadurch sehr gut gehandhabt beziehungsweise montiert werden.

Die Kästen des Holms sind so bemessen, daß sie sich teilweise überschneiden würden. Die Kästen des Holms haben solche Abmessungen, daS sie sowohl in der Breite als auch in der Höhe jeweils mehr als die Hälfte der entsprechenden Abmessungen des Holms betragen, wodurch sie jeweils in den Bereich des anderen Kastens hineinragen. Die Überschneidung wird dadurch verhindert, daß die sich überschneidenden Kanten abgeschrägt sind und die Schräge einen beiden Kästen gemeinsamen Steg bildet. Dadurch wird zum einen auf vorteilhafte Weise erreicht, daß die Kästen eine Größe haben, die es normalerweise nicht erlauben würde, zwei Kästen in dem Querschnitt des Profils unterzubringen. Gerade große Kästen wirken sich aber vorteilhaft auf die Stabilität des Kastenholms aus. Zum anderen ergibt sich durch den durch die Abschrägung entstandenen Steg eine Kräfteverteilung im Kastenholm, die sich ebenfalls besonders vorteilhaft auf die Stabilität des Kastenholms auswirkt. Durch den Verlauf des Steges etwa in diagonaler Richtung durch den Holm erhält der Holm auch eine verbesserte Stabilität gegen Torsion. Durch die erfindungsgemäße Anordnung der Kästen des Holms nehmen die sich im Holm befindlichen Stege einen Verlauf, der dem Holm eine besonders gute Stabilität verleiht.

Durch die Ausgestaltung der Befestigungsstege als Befestigungsschienen mit T-förmigen Nuten können bei der Befestigung sehr große Klemmkräfte auf die Befestigungsschienen ausgeübt werden. Durch die Verdickung der an der Außenseite des Holms liegenden Stege wird die Eigenschaft, daß sehr hohe Klemmkräfte ausgeübt werden können, nochmals verbessert sowie die Stabilität des Holms gegen Durchbiegung erhöht. Sehr gute Ergebnisse werden dadurch erreicht, daß die an der Außenseite des Holms liegenden Stege etwa dreimal so dick sind wie die restlichen, die T-Nut bildenden Stege. Durch die Anordnung der Kästen beziehungsweise der T-förmigen Befestigungschiene derart, daß der den Querbalken des T oben begrenzende Steg eine Wand des Kastenholms ist, ergibt sich eine äußerst vorteilhafte Aufteilung des Kastenholms sowie ein für die Festigkeit des Kastenholms entscheidendes Profil.

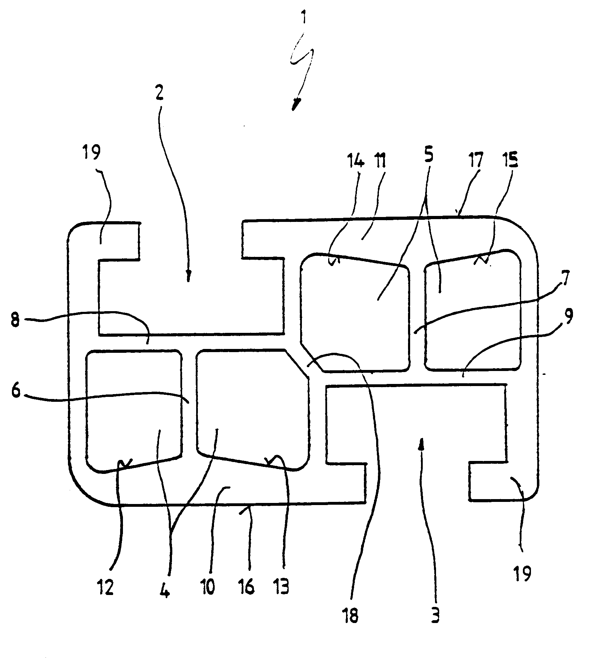

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur einen Querschnitt durch einen erfindungsgemäßen Holm.

Die Figur zeigt einen erfindungsgemäßen Kastenholm 1, der zwei Kästen 4, 5 hat, die durch Stege 6, 7 unterteilt sind. Die Stege 6, 7 erstrecken sich von einer Außenwand 10, 11 des Kastenholms 1 quer durch die Kästen 4, 5 zu einer der Außenwand 10, 11 gegenüberliegenden Wand 8, 9. Die Wand 8, 9 bildet die Begrenzung einer T-förmigen Nut 2, 3, die als Befestigungsschiene dient. Die T-förmige Nut 2, 3 ist in Richtung des sich durch den Kasten 4, 5 erstreckenden Stegs 6, 7 gegenüber dem Kasten 4, 5 angeordnet. Die Außenwände des Holms 1, die die T-förmige Nut 2, 3 begrenzen, sind etwa dreimal so dick wie die übrigen durch den Kastenholm verlaufenden Stege. Die Außenwände 10, 11 des Kastenholms 1, von denen sich die Stege 6, 7 erstrecken, verdicken sich zum Steg hin. Durch die Verdickung bilden die sich im Kasten befindlichen Flächen 12, 13, 14, 15 der Wände 10, 11 mit den sich außerhalb des Kastenholms 1 befindlichen Seiten 16, 17 der Wände 10, 11 einen Winkel von etwa 10°. Die Kästen 4, 5 haben solche Abmessungen, daß sie jeweils in die andere Hälfte des Kastenholms hineinragen. Hierdurch würde eine Überschneidung der Kastenholme stattfinden. Die Überschneidung wird dadurch verhindert, daß die sich überschneidenden Kanten abgeschrägt sind und die Schräge einen beiden Kästen gemeinsamen Steg 18 bildet. Der Steg 18 verläuft zwischen den sich gegenüberstehenden Kanten der T-förmigen Nuten. Die Außenkanten des Kastenholms 1, die die Kästen 4, 5 begrenzen, haben einen etwa dreimal so großen Radius wie die Außenkanten des Kastenholms 1, die die T-förmigen Befestigungsschienen 2, 3 begrenzen.

## Patentansprüche

1. Fahrgastsitz, vorzugsweise zum Einbau in Land-, Wasser- und Luftfahrzeuge, mit einem Sitzuntergestell, welches Stützfüße aufweist, auf denen mindestens ein als Kastenholm (1) ausgebildeter Querbügel befestigbar ist, welcher einstückig mit ihm verbundene Befestigungsstege (2, 3) hat, wobei
wenigstens zwei Kästen (4, 5) vorhanden sind und mindestens ein Kasten (4, 5) des Kastenholms (1) durch mindestens einen Steg (6, 7) unterteilt ist, der sich von einer im eingebauten Zustand sich waagrecht erstreckenden Wand (8, 9) des Kastens (4, 5) zu einer ihr gegenüberliegenden Wand (10, 11) des Kastens erstreckt, dadurch gekennzeichnet, daß mindestens eine (10, 11) der durch den Steg (6, 7) verbundenen Wände (8, 9, 10, 11) sich zum Steg (6, 7) hin verdickt, wobei
die Kästen (4, 5) des Holms solche Abmessungen haben, daß sie sowohl in der Breite als auch in der Höhe jeweils mehr als die Hälfte der entsprechenden Abmessungen des Holms betragen, wodurch sie jeweils in den Bereich des anderen Kastens hineinragen würden, und wobei eine Überschneidung dadurch verhindert wird, daß sich durch den überschneidenden Bereich ein beiden Kästen (4, 5) gemeinsamer Steg (18) erstreckt, der diagonal durch den sich überschneidenden Bereich verläuft.

2. Fahrgastsitz nach Anspruch 1,
dadurch gekennzeichnet,
daß sich die Wand (10, 11) in der Weise verdickt, daß auf beiden Seiten des Stegs (6, 7) die Ebene (12, 13, 14, 15) der sich im Kasten befindlichen Seite der Wand (10, 11) zur Ebene (16, 17) der sich außerhalb des Kastens befindlichen Seite der Wand (10, 11) einen Winkel von etwa 10° bildet.

3. Fahrgastsitz nach Anspruch 2,
dadurch gekennzeichnet,
daS sich die Verdickung in den Kasten (4, 5) hinein erstreckt.

4. Fahrgastsitz nach einem der
Ansprüche 1 bis 3,
dadurch gekennzeichnet,
daß die Befestigungsstege (2, 3) als Befestigungsschienen mit T-förmigen Nuten ausgebildet sind, deren an der Außenseite des Holms liegenden Wände (19) verdickt sind.

5. Fahrgastsitz nach Anspruch 4,
dadurch gekennzeichnet,
daß die an der Außenseite des Holms liegenden Wände der Nut (2, 3) etwa dreimal so dick sind wie die restlichen, die T-Nut bildenden Stege sind.

6. Fahrgastsitz nach Anspruch 4 oder 5,
dadurch gekennzeichnet,
daß der den Querbalken des T oben begrenzende Steg die eine Wand (8, 9) des Kastens (4, 5) bildet.

7. Fahrgastsitz nach Anspruch 6,
dadurch gekennzeichnet,
daß die Überschneidung so groß ist, daß die entsprechenden Wände der Kasten des Holms um etwa 7 bis 10 % der durch die entsprechenden Wände begrenzten Erstreckung des Kastens des Holms gegeneinander versetzt angeordnet sind.

## Claims

1. A passenger seat, preferably for installation in land vehicles, water-craft and aircraft, comprising a seat support free having support legs on which can be fixed at least one transverse bearer which is in the form of a box beam member (1) and which has fixing limbs (2, 3) integrally connected thereto, wherein there are at least two boxes (4, 5) and at least one box (4, 5) of the box beam member (1) is subdivided by at least one limb (6, 7) which extends from a wall (8, 9) of the box (4, 5), which wall extends horizontally in the installed condition, to a wall (10, 11) of the box, which is opposite thereto, characterised in that at least one (10, 11) of the walls (8, 9, 10, 11) which are connected by the limb (6, 7) increases in thickness towards the limb (6, 7), the boxes (4, 5) of the beam member being of such dimensions that both in respect of width and also in respect of height they are each more than half the corresponding dimensions of the beam member whereby they would respectively project into the region of the respective other box, and overlapping is prevented by virtue of the fact that extending through the overlapping region is a limb (18) which is common to both boxes (4, 5) and which extends diagonally through the overlapping region.

2. A passenger seat according to claim 1 characterised in that the wall (10, 11) increases in thickness in such a way that on both sides of the limb (6, 7) the plane (12, 13, 14, 15) of the side of the wall (10, 11), which is in the box, forms an angle of about 10° relative to the plane (16, 17) of the side of the wall (10, 11), which is outside the box.

3. A passenger seat according to claim 2 characterised in that the thickening extends into the box (4, 5).

4. A passenger seat according to one of claims 1 to 3 characterised in that the fixing limbs (2, 3) are in the form of fixing rails with T-shaped grooves whose walls (19) which are at the outside of the beam member are increased in thickness.

5. A passenger seat according to claim 4 characterised in that the walls of the groove (2, 3), which are at the outside of the beam member, are approximately three times as thick as the remaining limbs forming the T-shaped groove.

6. A passenger seat according to claim 4 or claim 5 characterised in that the limb which upwardly delimits the crossbar of the T-shape forms the one wall (8, 9) of the box (4, 5).

7. A passenger seat according to claim 6 characterised in that the overlap is so great that the corresponding walls of the boxes of the beam member are arranged displaced relative to each other by about 7 to 10% of the extent of the box of the beam member, which extent is delimited by the corresponding walls.

## Revendications

1. Siège de passager, destiné de préférence à être installé dans des moyens de transport terrestres, maritimes et aériens, comprenant un soubassement de siège qui présente des pieds sur lesquels peut être fixée au moins une membrure transversale réalisée à la façon d'un longeron-caisson (1) et à laquelle sont reliées d'un seul tenant des barres de fixation (2, 3), le longeron possédant au moins deux caissons (4, 5) dont l'un au moins est divisé par au moins une entretoise (6, 7) qui s'étend d'une paroi (8, 9) du caisson (4, 5) orientée horizontalement à l'état installé jusqu'à une paroi (10, 11) située en face d'elle du caisson, caractérisé en ce qu'au moins l'une (10, 11) des parois (8, 9, 10, 11) reliées entre elles par l'entretoise (6, 7) s'épaissit vers l'entretoise (6, 7), les caissons (4, 5) du longeron ayant des dimensions telles qu'elles dépassent chaque fois, a la fois en largeur et en hauteur, la moitié des dimensions correspondantes du longeron, de sorte qu'elles s'étendraient chaque fois dans la zone de l'autre caisson sans une disposition particulière, l'intersection étant empêchée du fait que la zone d'intersection fictive est traversée d'une entretoise (18) commune aux deux caissons (4, 5) et qui s'étend en diagonale à travers cette zone.

2. Siège de passager selon la revendication 1, caractérisé en ce que la paroi (10, 11) à laquelle est reliée l'entretoise, s'épaissit de manière que, des deux côtés de l'entretoise (6, 7), le plan (12, 13, 14, 15) du côté de la paroi (10, 11) situé à l'intérieur du caisson forme un angle d'environ 10° avec le plan (16, 17) du côté de la paroi (10, 11) situé à l'extérieur du caisson.

3. Siège de passager selon la revendication 2, caractérisé en ce que l'épaississement s'étend à l'intérieur du caisson (4, 5).

4. Siège de passager selon une des revendications 1 à 3, caractérisé en ce que les barres de fixation (2, 3) sont réalisées comme des rails de fixation possédant des rainures en T et dont les parois (19) situées sur le côté extérieur du longeron sont épaissies.

5. Siège de passager selon la revendication 4, caractérisé en ce que les parois de délimitation de la rainure (2, 3) situées sur le côté extérieur du longeron, sont environ trois fois plus épaisses que les parois ou entretoises restantes formant la rainure en T.

6. Siège de passager selon la revendication 4 ou 5, caractérisé en ce que l'entretoise délimitant le grand côté de la barre transversale du T constitue une paroi (8, 9) du caisson (4, 5).

7. Siège de passager selon la revendication 6, caractérisé en ce que l'intersection fictive est si grande que les parois concernées des caissons du longeron sont mutuellement décalées d'une quantité correspondant à peu près à 7 - 10 % de l'étendue de caisson délimitée par les parois en question.
